# EUROPÄISCHE PATENTANMELDUNG

(11) **EP 1 052 086 A2**
(43) Veröffentlichungstag der Anmeldung: **15.11.2000**
(21) Anmeldenummer: 00890131.6
(22) Anmeldetag: 27.04.2000
(51) Int. Cl.: B30B 15/30

(54) **Vorrichtung zum Befüllen einer Presse**

(30) Priorität: 03.05.1999 AT 30399 U
(71) Anmelder: LEINWEBER MASCHINEN GESELLSCHAFT m.b.H. & Co. KG, 2700 Wiener Neustadt (AT)
(72) Erfinder: Leinweber, Johann, 2700 Wiener Neustadt (AT)
(74) Vertreter: Müllner, Erwin, Dr.

(57) **Zusammenfassung**

Die Vorrichtung weist einen gleitend über der Pressform (5) hin und her bewegbaren Füllbehälter (8) auf. Der Stempel (6) der Presse wird dabei synchron mit der Hin-und-her-Bewegung abgesenkt. Erfindungsgemäß sind die in Bewegungsrichtung vorne und hinten liegenden Seitenwände (12, 13) des Füllbehälters (8) v-förmig ausgebildet, wobei die Spitzen der beiden v-förmigen Seitenwände (12, 13) in dieselbe Richtung weisen. Dadurch wird die Befüllung nicht nur in Bewegungsrichtung des Füllbehälters (8), sondern auch quer dazu sehr gleichmäßig. Es kann die Füllform (8) durch eine oder mehrere Trennwände (9) in mehrere Kammern unterteilt sein, damit verschiedene Materialien ohne gegenseitige Kontamination in Lagen in die Presse eingebracht werden können. Die Trennwände (9) sind dann auch v-förmig. Es ist zweckmäßig, wenn der Füllbehälter (8) auf einer Gleitplatte (7) hin und her bewegbar ist, wobei dann die Gleitplatte (7) eine Öffnung (14) aufweist, die im Wesentlichen der Pressform (5) entspricht, und wenn die Gleitplatte (7) samt Füllbehälter (8) über die Pressform (5) und von der Pressform (5) weg bewegbar ist.

## Beschreibung

Die vorliegende Erfindung betrifft eine Vorrichtung zum Befüllen einer Presse mit einem gleitend über der Pressform hin und her bewegbaren Füllbehälter, dessen untere Kanten als Abstreifer wirken, wobei der Stempel der Presse synchron mit der Hin-und-her-Bewegung absenkbar ist. Die vorliegende Erfindung betrifft auch eine Presse zur Herstellung von Bremsbelägen mit solch einer Vorrichtung.

Eine derartige Vorrichtung ist aus der US-A-3 811 808 bekannt. Es ist nicht einfach, eine Presse gleichmäßig mit dem zu pressenden Material zu füllen, gleichgültig, ob es sich um Granulat oder um fasriges Material handelt. Ist die Presse ungleichmäßig gefüllt, so hat nach dem Pressvorgang der gepresste Körper eine ungleichmäßige Dichte: dort, wo die Presse zu stark befüllt war, ist die Dichte höher als dort, wo die Presse zu gering befüllt war.

Um eine gleichmäßige Befüllung zu erreichen, ist in der US-A-3 811 808 vorgeschlagen worden, zunächst eine Füllform mit der genau eingewogenen Menge an zuzuführendem Material zu füllen. Diese Füllform weist gemäß dieser Schrift dieselbe Form auf wie die Pressform. Der Pressstempel befindet sich zunächst in nur gering abgesenkter Höhe, und die Füllform wird horizontal und linear über die Pressform bewegt. Dadurch wird die Pressform mit einem Teil des Materials gefüllt. Die in Bewegungsrichtung hintere Seite der Füllform streift das Material ab, sodass überschüssiges Material in der Füllform verbleibt. Durch das Abstreifen wird aber immer etwas zu viel Material mitgenommen, sodass nun die Pressform in Bewegungsrichtung hinten etwas geringer befüllt ist als vorne. Nun wird der Pressstempel weiter abgesenkt und die Füllform wird in der Gegenrichtung über die Pressform geführt. Jetzt ist auf der anderen Seite der Pressform etwas weniger Material. Anschließend wird der Pressstempel abermals abgesenkt und die Pressform wieder in der ursprünglichen Richtung über die Pressform geführt, usw., bis der Pressstempel so weit abgesenkt ist, dass das gesamte Material in der Pressform ist. Auf diese Weise wird die Presse sehr gleichmäßig befüllt.

Problematisch ist dabei, dass die Presse bei dieser bekannten Vorrichtung zwar in Bewegungsrichtung der Füllform sehr gleichmäßig befüllt wird, nicht aber in der Querrichtung. Wenn die Füllform ursprünglich in Querrichtung nicht gleichmäßig befüllt worden ist, so ist diese Ungleichmäßigkeit auch noch in der Presse vorhanden, und der gepresste Körper weist immer noch Dichteschwankungen auf.

Es ist Aufgabe der vorliegenden Erfindung, diesen Nachteil zu beseitigen.

Diese Aufgabe wird gemäß der vorliegenden Erfindung bei einer Vorrichtung der eingangs genannten Art dadurch gelöst, dass die in Bewegungsrichtung vorne und hinten liegenden Seitenwände des Füllbehälters so ausgebildet sind, dass ihr Grundriss v-förmig ist, wobei die Spitzen der beiden v-förmigen Seitenwände in dieselbe Richtung weisen und sich bei der Hin-und-her-Bewegung über die Pressform bewegen.

Auf diese Weise bilden die Vorder- und die Hinterseite des Füllbehälters eine Art Pflug, wobei der eine nach außen und der andere nach innen fördert. (Es wirkt immer nur der in Bewegungsrichtung hintere Pflug.)

Dadurch ergibt sich eine sehr gleichmäßige Befüllung nicht nur in der Bewegungsrichtung der Füllform, sondern auch quer dazu. Ein weiterer Vorteil besteht darin, dass die Breite des Füllbehälters nicht genau der Breite der Pressform entsprechen muss. Abweichungen bis zu mehreren Millimetern sind möglich, weil das Material auf Grund seiner Trägheit vom nach außen fördernden Pflug bis zum Rand der Pressform rutscht, auch wenn die Füllform etwas schmäler ist. Dies ist insofern günstig, als nicht bei jedem Wechsel der Pressform auch die Füllform gewechselt werden muss. Man kann auch bei einer Vielzahl von Pressformen mit nur wenigen Füllformen auskommen.

Um einen Presskörper, der aus mehreren verschiedenen Schichten besteht, herzustellen, ist es zweckmäßig, wenn der Füllbehälter zumindest zwei in Bewegungsrichtung hintereinander liegende Kammern aufweist, wobei die Trennwand bzw. die Trennwände der Kammern ebenfalls v-förmig ausgebildet sind und die Spitzen aller v-förmigen Seitenwände in dieselbe Richtung weisen.

Man befüllt zunächst eine Kammer mit einem ersten Material und bringt dieses durch Hin-und-Her-Bewegen der Füllform wie oben beschrieben in die Pressform ein. Nun kann man das Material verdichten, indem man mit einem entsprechenden Stempel von oben draufdrückt. Falls nicht durch das Verdichten bereits genug Platz entstanden ist, senkt man den Pressstempel noch zusätzlich ab. Man befüllt die nächste Kammer mit einem anderen Material und bringt dieses wieder durch zumindest eine Hin-und-Her-Bewegung in die Pressform ein. Dies wiederholt man gegebenenfalls so lange, bis alle Materialschichten gebildet sind.

Die Verwendung verschiedener Kammern bewirkt, dass die verschiedenen Materialien einander nicht gegenseitig kontaminieren können.

Vorzugsweise ist der Füllbehälter auf einer Gleitplatte hin und her bewegbar und weist die Gleitplatte eine Öffnung auf, die im Wesentlichen der Pressform entspricht, wobei die Gleitplatte samt Füllbehälter über die Pressform und von der Pressform weg bewegbar ist. Dies hat den Vorteil, dass die Füllform auf der Gleitplatte nur so weit hin und her bewegbar sein muss, dass sie die Pressform überstreichen kann. Sie muss nicht bis zur Füllstation bewegbar sein, diese meist wesentlich längere Bewegung führt man mit der gesamten Einheit bestehend aus Gleitplatte und Füllform aus. Diese Ausführungsform ist auch insofern günstig, als während des Pressvorgangs, wenn die Presse geschlossen ist, die gesamte Einheit aus der Presse ausgefahren ist, sodass es zu keinerlei Kollisionen kommen kann.

Pressen zur Herstellung von Bremsbelägen weisen einen Presskolben, einen Gegendruckkolben und eine Pressform auf. Oft ist auch eine Gegendruckplatte vorgesehen, die aus der Presse entfernt, beispielsweise ausgeschwenkt werden kann. Diese Gegendruckplatte dient dazu, den Raum zwischen Gegendruckkolben und Pressform auszufüllen, sodass der Gegendruckkolben nur einen geringen Weg zurücklegen muss. Wenn Bremsbeläge mit Trägeplatten hergestellt werden sollen, weist normalerweise die Pressform an der Oberseite Positionierstifte auf, um die Trägerplatte, die entsprechende Bohrungen aufweist, automatisch in die richtige Position zu bringen. Diese Positionierstifte würden aber mit der Gleitplatte kollidieren. Aus diesem Grunde ist gemäß einer Ausgestaltung der Erfindung vorgesehen, dass bei solch einer Presse die Oberseite der Pressform frei von Positionierstiften ist, dass die Positionierstifte am Gegendruckkolben bzw. an der Gegendruckplatte vorgesehen sind und dass am Gegendruckkolben bzw. an der Gegendruckplatte Haltevorrichtungen für eine Trägerplatte vorgesehen sind.

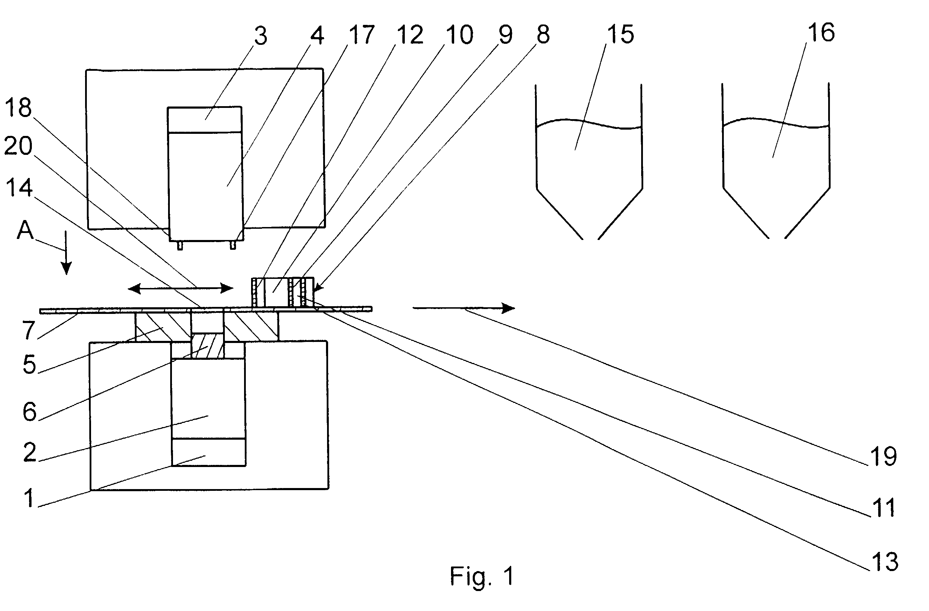

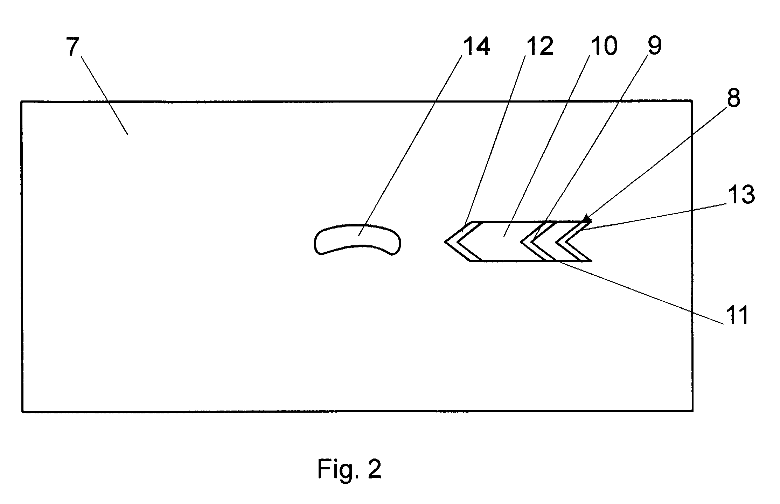

Es wird dann die Trägerplatte am Gegendruckkolben bzw. an der Gegendruckplatte positioniert und durch die Haltevorrichtungen gehalten, bis der Gegendruckkolben abgesenkt und dadurch die Trägerplatte gegen die Pressform gedrückt wird. Anhand der beiliegenden Zeichnungen wird die Erfindung näher erläutert. Es zeigt: Fig. 1 einen Querschnitt durch eine erfindungsgemäße Presse und Fig. 2 eine Ansicht gemäß Pfeil A in Fig. 1.

Die Presse weist einen unteren Presszylinder 1 mit einem Presskolben 2 und einen oberen Presszylinder 3 mit einem Gegendruckkolben 4 auf. Auf dem unteren Presszylinder 1 ist die Pressform 5 montiert. Auf dem Presskolben 2 ist oben ein Pressstempel 6 montiert, der die gleiche Kontur hat wie die Pressform 5. Der untere Presskolben 1 ist mit einem Positionsgeber (nicht dargestellt) versehen, sodass er in beliebige vorgegebene Positionen gefahren werden kann.

Auf der Oberseite der Pressform 5 befindet sich eine Gleitplatte 7, die aus der Presse ausgefahren werden kann. Zu diesem Zweck ist sie auf Linearführungen montiert. Auf der Gleitplatte 7 befindet sich eine Füllform 8, die durch eine Trennwand 9 in zwei Kammern 10,11 unterteilt ist. Sie weist in Bewegungsrichtung vorne und hinten eine v-förmige Seitenwand 12,13 auf. Auch die Trennwand 9 ist v-förmig, wobei die Spitzen der v-förmigen Wände 9,12,13 alle in dieselbe Richtung weisen. Die Gleitplatte 7 weist eine Öffnung 14 auf, die in der dargestellten Position der Gleitplatte 7 genau mit der Pressform 5 fluchtet.

Die Füllform 8 ist auf der Gleitplatte 7 linear verschiebbar angeordnet. Zur Verschiebung kann ein Stellmotor vorgesehen sein, der die Füllform mittels eines Zahnriemens in genau vorgegebene Positionen verschieben kann. Dies ist deshalb wichtig, weil dadurch die Geschwindigkeit der Bewegung vorgegeben werden kann, die auf die Gleichmäßigkeit der Befüllung ebenso Einfluss hat wie die Anzahl der Bewegungen und das Maß der Absenkbewegungen des Presskolbens 2.

Seitlich gegenüber der Presse versetzt sind zwei Vorratsbehälter 15,16 vorgesehen, in denen Reibbelagpulver und Zwischenschichtpulver gespeichert ist. Durch eine Wägevorrichtung (nicht dargestellt) kann aus den Vorratsbehältern 15,16 eine genau definierte Materialmenge abgegeben werden.

An der Unterseite des Gegendruckkolbens sind Positionierstifte 17,18 vorgesehen.

Die erfindungsgemäße Vorrichtung funktioniert wie folgt: Die Gleitplatte 7 wird samt Füllform 8 (und natürlich auch samt Schrittmotor und Zahnriemen) in Richtung Pfeil 19 verschoben, bis die Kammer 10 unter dem Vorratsbehälter 15 steht. Nun wird mittels der (nicht dargestellten) Wägevorrichtung eine genau definierte Menge an Bremsbelagpulver in die Kammer 10 eingebracht. Es kommt dabei nicht darauf an, wie das Bremsbelagpulver in der Kammer 10 verteilt ist. Nun wird die Gleitplatte 7 in die in Fig. 1 dargestellte Position gebracht, wo die Öffnung 14 mit der Pressform 5 fluchtet. Der Presskolben 2 wird so weit abgesenkt, dass ein Teil der Pressform 5, nicht aber die gesamte Pressform 5 frei ist. Nun wird die Füllform 8 mittels des Schrittmotors nach links über die Pressform 5 bewegt (Pfeil 20). Die Trennwand 9 wirkt dabei als Abstreifer. Sie streicht das Bremsbelagpulver glatt und drückt es infolge der v-Form nach außen. Insbesondere bei fasrigem Material kommt es aber infolge von Klümpchen zu Löchern in der Oberfläche, insbesondere auf der in der Fig. 1 rechten Seite. Jetzt wird der Presskolben 2 ein weiteres Stück abgesenkt und die Füllform 8 zurück nach rechts bewegt. Dadurch fällt weiteres Bremsbelagpulver in die Pressform 5. Diesmal wirkt die Seitenwand 12 als Abstreifer, infolge der v-Form fördert sie das Bremsbelagpulver nach innen. Die Hin-und-her-Bewegung der Füllform 8 mit der synchronisierten Abwärtsbewegung des Presskolbens 2 wird so lange fortgesetzt, bis das gesamte Bremsbelagpulver in der Pressform 5 liegt.

Die Abwärtsbewegungen des Presskolbens 2 müssen nicht gleichmäßig sein. Insbesondere bei fasrigem Material ist es günstig, bei der ersten Bewegung relativ viel (z.B. 60%) einzubringen und bei den weiteren Bewegungen immer weniger, bis schließlich bei der letzten Bewegung nur noch einige wenige Prozent eingebracht werden.

Nachdem die Pressform 5 gefüllt wurde, wird das Bremsbelagpulver mittels eines entsprechend geformten Stempels (nicht dargestellt) verdichtet, um eine glatte Oberfläche zu bilden. Wenn auf diese Weise nicht genug Platz für das Einbringen von Zwischenschichtpulver geschaffen wurde, wird der Presskolben 2 ein weiteres Stück abgesenkt. Die Gleitplatte 7 wird wieder nach rechts verfahren, diesmal so weit, bis die Kammer 11 unter dem Vorratsbehälter 16 liegt. Aus diesem wird eine genau eingewogene Menge an Zwischenschichtpulver in die Kammer 11 abgegeben.

Nun wird das Zwischenschichtpulver auf die eben beschriebene Weise in die Pressform 5 eingebracht.

Dann wird die Gleitplatte 7 wieder nach rechts verfahren und das Zwischenschichtpulver durch den (nicht dargestellten) Stempel komprimiert.

Jetzt kann der eigentliche Pressvorgang beginnen. Es wird eine Trägerplatte mittels ihrer Positionierlöcher an den Positionierstiften 17,18 ausgerichtet und durch eine Haltevorrichtung (nicht dargestellt) fixiert. Als Haltevorrichtung können Magnete dienen, aber auch mechanische Klammern. Der Gegendruckkolben 4 wird so weit abgesenkt, bis die Trägerplatte an der Oberseite der Pressform 5 aufliegt und gegen diese gepresst wird. Durch Beaufschlagung des Presszylinders 1 wird der Presstempel 6 in die Pressform 5 gedrückt und der Bremsbelag gepresst. Dieser Pressvorgang dauert meist einige Minuten und findet bei erhöhter Temperatur statt. (Zu diesem Zweck ist die Pressform beheizt.)

Die Erfindung wurde zwar an Hand einer Presse für Bremsbeläge beschrieben, sie ist aber ebenso bei Pressen für Magnete, Schleifscheiben oder Keramikteile (z.B. Isolatoren) einsetzbar.

## Patentansprüche

1. Vorrichtung zum Befüllen einer Presse mit einem gleitend über der Pressform hin und her bewegbaren Füllbehälter (8), dessen untere Kanten als Abstreifer wirken, wobei der Stempel (6) der Presse synchron mit der Hin-und-her-Bewegung absenkbar ist, **dadurch gekennzeichnet,** dass die in Bewegungsrichtung vorne und hinten liegenden Seitenwände (12, 13) des Füllbehälters (8) so ausgebildet sind, dass ihr Grundriss v-förmig ist, wobei die Spitzen der beiden v-förmigen Seitenwände (12, 13) in dieselbe Richtung weisen und sich bei der Hin-und-her-Bewegung über die Pressform bewegen.

2. Vorrichtung nach Anspruch 1, **dadurch gekennzeichnet,** dass der Füllbehälter (8) zumindest zwei in Bewegungsrichtung hintereinander liegende Kammern (10, 11) aufweist, wobei die Trennwand (9) bzw. die Trennwände der Kammern (10, 11) ebenfalls v-förmig ausgebildet sind und die Spitzen aller v-förmigen Wände (9, 12, 13) in dieselbe Richtung weisen.

3. Vorrichtung nach Anspruch 1 oder 2, **dadurch gekennzeichnet,** dass der Füllbehälter (8) auf einer Gleitplatte (7) hin und her bewegbar ist, dass die Gleitplatte (7) eine Öffnung (14) aufweist, die im Wesentlichen der Pressform (5) entspricht und dass die Gleitplatte (7) samt Füllbehälter (8) über die Pressform (5) und von der Pressform (5) weg bewegbar ist.

4. Presse mit einem Presskolben (2), einem Gegendruckkolben (4), gegebenenfalls einer aus der Presse entfernbaren Gegendruckplatte (4) und einer Pressform (5) zur Herstellung von Bremsbelägen mit Trägerplatten, wobei die Presse eine Vorrichtung nach Anspruch 3 aufweist, **dadurch gekennzeichnet,** dass die Oberseite der Pressform (5) frei von Positionierstiften ist, dass die Positionierstifte (17, 18) am Gegendruckkolben (4) bzw. an der Gegendruckplatte vorgesehen sind und dass am Gegendruckkolben (4) bzw. an der Gegendruckplatte Haltevorrichtungen für eine Trägerplatte vorgesehen sind.
